# EUROPÄISCHE PATENTSCHRIFT

(11) **EP 0 754 891 B1**
(45) Veröffentlichungstag und Bekanntmachung des Hinweises auf die Patenterteilung: **28.06.2000**
(21) Anmeldenummer: 96111473.3
(22) Anmeldetag: 17.07.1996
(51) Int. Cl.: F16J 15/12

(54) **Dichtungsring**
Sealing ring
Anneau d'étanchéité

(30) Priorität: 20.07.1995 DE 19526364
(43) Veröffentlichungstag der Anmeldung: 22.01.1997
(73) Patentinhaber: Klinger AG, CH-6304 Zug (CH)
(72) Erfinder: Pflug, Herwig, 65529 Waldems (DE)
(74) Vertreter: Sparing - Röhl - Henseler Patentanwälte

(56) Entgegenhaltungen:
- DE-A- 4 306 369
- US-A- 4 423 544
- US-A- 5 040 805

## Beschreibung

Die Erfindung betrifft einen Dichtungsring nach dem Oberbegriff des Anspruchs 1.

Starre und bewegliche Bauteile werden in Klemmverbindungen, Verschraubungen und dgl. gewöhnlich über O-Ringdichtungen oder Profilringdichtungen bevorzugt aus einem elastomeren Werkstoff abgedichtet. Allerdings weisen derartige Dichtringe bei statischer Belastung nach kurzer Zeit eine deutlich verminderte Rückstellkraft im Berührungsbereich auf (Druckverformungsrest). Bei höheren Temperaturen und/ oder zusätzlicher Einwirkung bestimmter Medien in verschiedenen Aggregatzuständen (beispielsweise Wasserdampf) haben derartige Dichtringe aus Elastomeren schnell ihre Einsatzgrenze erreicht.

Ferner sind Dichtringe, die beispielsweise als Stopfbuchsdichtungen bzw. in Absperrorganen zum Abdichten im Bereich des Mediumdurchgangs verwendet werden, bekannt, die eine zylindrische Schichtung aus Graphitlamellen und Metallamellen aufweisen, vgl. z.B. EP-C 0 248 944. Diese sind allerdings nicht geeignet, O-Ringdichtungen zu ersetzen.

Aufgabe der Erfindung ist es, einen Dichtungsring nach dem Oberbegriff des Anspruchs 1 zu schaffen, der anstelle einer elastomeren O-Ringdichtung bei erweiterten Einsatzgrenzen verwendbar ist.

Diese Aufgabe wird entsprechend dem kennzeichnenden Teil des Anspruchs 1 gelöst.

Ein derartiger Dichtungsring läßt sich im Bereich von -200 bis +500°C bei Drücken vom Vakuum bis zu etwa 200 bar einsetzen und ist hochgradig chemisch beständig. Er läßt sich zur Abdichtung im Bereich von Verschraubungen, Klemmverbindungen oder als nachstellbare Packung zur Abdichtung von ruhenden und beweglichen Bauteilen od.dgl. verwenden.

Infolge der Schichtstruktur des linsenförmigen Dichtungsrings mit von innen nach außen zunehmender Dichte der Graphitlamellen führt bei dem zwischen konischen Dichtflächen eingespannten Dichtungsring ein im Bereich geringerer Dichte, d.h. von innen her sich in dem Dichtungsring aufbauender Druck zu einer Verstärkung der Auflagekraft im Bereich der gewölbten Flächen und verstärkt damit die Dichtwirkung. Am Außenumfang ergeben sich mehrere, schmale, umlaufende, voneinander getrennte Dichtflächen, die so gegen Auspülen gesichert sind. Dies führt damit zu einer Art Spiraldichtungswirkung.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.

Fig. 1 zeigt einen Dichtungsring teilweise im Schnitt und teilweise in Seitenansicht.

Fig. 2 zeigt eine Draufsicht auf den Dichtungsring von Fig. 1.

Fig. 3 zeigt eine weitere Ausführungsform eines Dichtungsrings teilsweise im Schnitt.

Fig. 4 zeigt ausschnittweise im Schnitt eine zusätzliche Ausführungsform eines Dichtungsrings.

Der dargestellte Dichtungsring besitzt Linsenform und besteht aus abwechselnd angeordneten, ringförmigen Graphitlamellen 1 aus expandiertem, flexiblem Graphit und ringförmigen Metallamellen 2, letztere beispielsweise aus Edelstahlfolie, wobei sämtliche Lamellen 1, 2 am Innenrand 3 der im dargestellten Ausführungsbeispiel zylindrischen Durchtrittsöffnung 4 münden. Ferner ist ober- und unterseitig jeweils eine Graphitlamelle 1' angeordnet, die mindestens die Hälfte der gewölbten Oberfläche des Dichtungsrings vom Innenrand 3 her Einnimmt. Im verbleibenden Außenrandbereich 5, etwa zwischen 10 und 50% der verbleibenden Oberfläche, münden dagegen umlaufend mehrere Metallamellen 2 und Graphitlamellen 1, so daß mehrere umlaufende, schmale, durch die dort mündenden Metallamellen 2 voneinander getrennte Dichtflächen 6 gebildet werden.

Die Linsenform ergibt sich durch unterschiedliches Verpressen der Schichtung aus Graphitlamellen 1 und Metallamellen 2 von innen nach außen. Die Dichte der Grapfitlamellen 1, 1' steigt von innen nach außen an, und zwar vorzugsweise von etwa 0,9 - 1,4 g/cm³ bis etwa 1,8 - 2,3 g/cm³.

Bei der Herstellung des Dichtungsrings können Kleber oder Tränkungen verwendet werden, auch kann eine Antihaftbeschichtung vorgesehen werden, damit der Dichtungsring nicht im Werkzeug kleben bleibt. Gegebenenfalls kann eine Nachbehandlung vorgesehen sein, um diese Hilfsmittel wenigstens teilweise wieder zu entfernen. Um als nachstellbare Packung zur Abdichtung von ruhenden und bewegten Bauteilen (Flächen) verwendet werden zu können, können gezielte Nachbehandlungen vorgenommen werden, etwa Restfeuchtigkeit entzogen werden.

Die Krümmung der gewölbten Oberflächen des Dichtungsrings kann in unterschiedlichen Krümmungsradien ausgeführt sein. Die Dicke wird entsprechend der Dichtungsaufgabe gewählt.

Die Durchtrittsöffnung 4 kann, wie dargestellt, zylindrisch glatt durchgehend sein, sie kann aber auch einen oder mehrere Absätze aufweisen, konisch oder teilweise konisch ausgebildet sein oder eine an ein bestimmtes Bauteil angepaßte Form aufweisen.

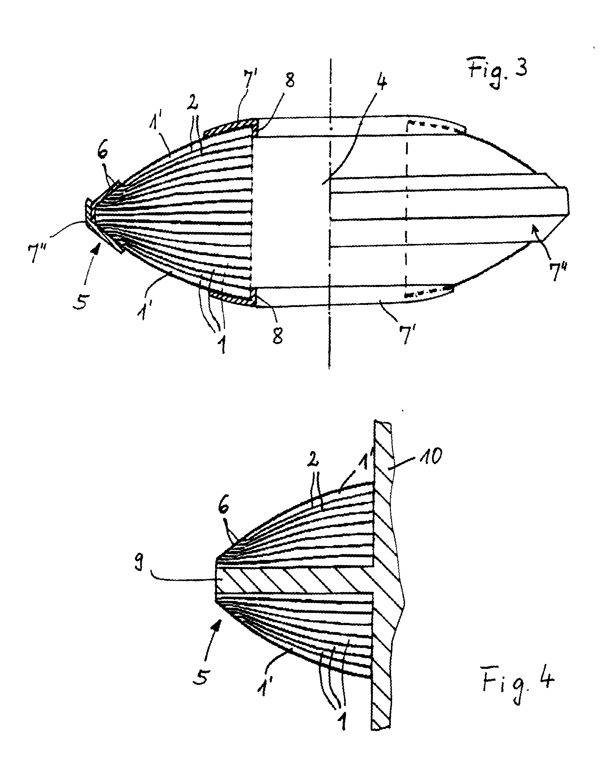

Der Dichtungsring, kann wie in Fig. 3 dargestellt, auch Begrenzungsringe 7', 7" aus unterschiedlichen Werkstoffen, etwa aus einem Metall, beispielsweise Edelstahl, Sintermetall, Preßstoff oder Kunststoff aufweisen, die beispielsweise eine Stärke von 0,05 bis 3 mm besitzen. Diese dienen dazu, in entsprechenden Anwendungsfällen ein Ablösen oder Auswaschen von Graphitpartikeln zu verhindern.

So kann der Dichtungsring ober- als auch unterseitig einen gewölbten, inneren Begrenzungsring 7' aufweisen, der gegebenenfalls einen angezogenen Kragen 8 aufweist und sich über einen relativ schmalen Bereich der gewölbten Fläche des Dichtungsrings erstreckt. Wenn der Begrenzungsring 7' aus entsprechend deformierbarem Material ist, kann er eben sein, d.h. im nicht eingebauten Zustand parallel zur Mittelebene des Dichtungsrings verlaufen und braucht nicht in seiner Form an die elliptische Form des Dichtungsrings angepaßt sein. Durch das Einspannen erfolgt dann seine Anlage an den Dichtungsring.

Auch kann der Dichtungsring zusätzlich oder stattdessen einen am Dichtungsring anliegenden, äußeren Begrenzungsring 7" aufweisen, der den äußeren Randbereich des Dichtungsrings umgibt, sich zweckmäßigerweise bis über den Außenrand der durchgehenden Graphitlamelle 1' erstrecken kann sowie einstückig oder auch, wie in Fig. 3 dargestellt, zweistückig sein kann, wobei der Begrenzungsring 7" in letzterem Fall mit ineinandergreifenden Rändern oder einem Außenbördel versehen sein kann.

Wie in Fig. 4 dargestellt, kann der Dichtungsring auch zweiteilig aufgebaut sein, indem er aus zwei in einer mittleren Radialebene geteilten Ringhälften 1" besteht, um so beidseitig eines scheibenförmigen Abschnitts 9 eines Bauteil 10 angeordnet werden zu können.

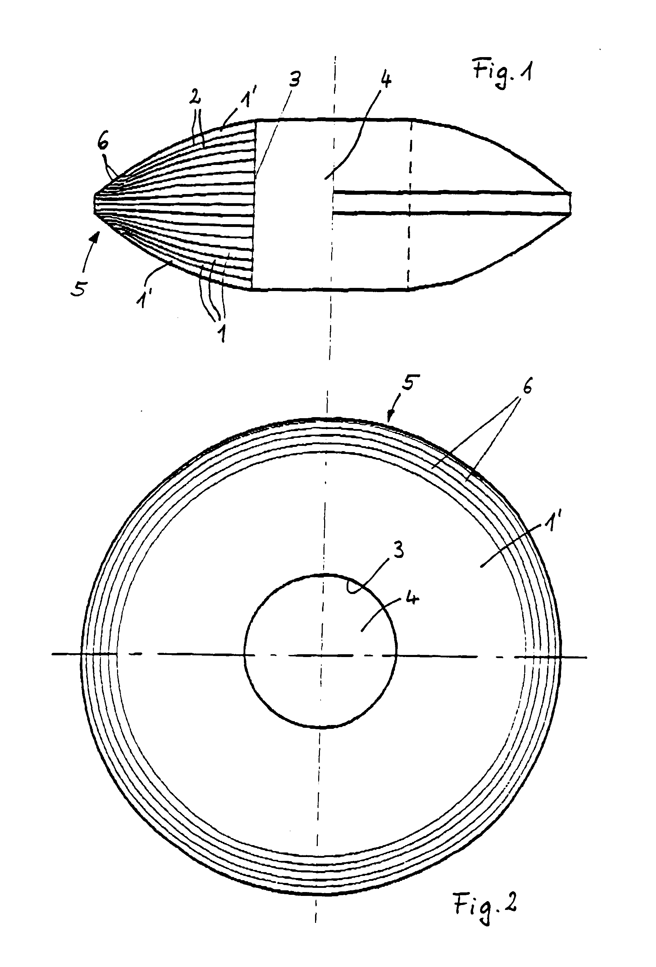

Der Dichtungsring, ob einstückig gemäß Fig. 1 oder 3 oder zweistückig gemäß Fig. 4, kann auch mit einem Bauteil verbunden sein.

## Patentansprüche

1. Dichtungsring bestehend aus abwechselnd angeordneten Lamellen (1) aus expandiertem Graphit und Metallamellen (2), wobei der Dichtungsring eine einen Innenrand (3) definierende Durchtrittsöffnung (4) aufweist, dadurch **gekennzeichnet**, daß der Dichtungsring linsenförmig ausgebildet ist, wobei die Graphitlamellen (1) von innen nach außen eine steigende Dichte aufweisen und die Schichtung derart ausgeführt ist, daß an beiden Seiten mindestens die Hälfte der gewölbten Oberfläche von Innenrand (3) aus gesehen von einer durchgehenden Graphitlamelle (1') abgedeckt ist, während im Außenrandbereich (5) mehrere Metall- und Graphitlamellen (1, 2) umlaufend münden.

2. Dichtungsring nach Anspruch 1, dadurch gekennzeichnet, daß sich die durchgehende Graphitlamelle (1') über etwa 50 bis 90% der gewölbten Oberfläche erstreckt.

3. Dichtungsring nach Anspruch 1 oder 2, dadurch gekennzeichnet, daß die Dichte von innen nach außen von etwa 0,9 - 1,4 g/cm³ bis etwa 1,8 - 2,3 g/cm³ variiert.

4. Dichtungsring nach einem der Ansprüche 1 bis 3, dadurch gekennzeichnet, daß benachbart zur Durchtrittsöffnung (4) ober- und/oder unterseitig ein Begrenzungsring (7') vorgesehen ist.

5. Dichtungsring nach einem der Ansprüche 1 bis 4, dadurch gekennzeichnet, daß der Außenrandbereich (5) von einem Begrenzungsring (7") umgeben ist.

6. Dichtungsring nach einem der Ansprüche 1 bis 4, dadurch gekennzeichnet, daß er aus zwei in einer mittleren Radialebene geteilten Ringhälften (1") besteht.

## Claims

1. Sealing ring consisting of alternating discs (1) of expanded graphite and metal discs (2), in which case the sealing ring has an opening (4) defining an inner edge (3), characterised in that the sealing ring is constructed in the shape of a lens, in which case the graphite discs (1) have increasing density from the inside outwards and the stratification is constructed so that on both sides at least half of the curved surface is covered by a continuous graphite disc (1'), seen from the inner edge (3) outwards, whereas in the outer edge region (5), several metallic and graphite discs (1, 2) open out in a circular manner.

2. Sealing ring according to Claim 1, characterised in that the continuous graphite disc (1') extends over approximately 50 to 90% of the curved surface.

3. Sealing ring according to Claim 1 or 2, characterised in that the density varies from the inside outwards from approximately 0.9 - 1.4 g/cm³ to approximately 1.8 - 2.3 g/cm³.

4. Sealing ring according to one of Claims 1 to 3, characterised in that a boundary ring (7') is provided adjacent to the opening (4) on the upper and/or lower side.

5. Sealing ring according to one of Claims 1 to 4, characterised in that the outer edge region (5) is surrounded by a boundary ring (7'').

6. Sealing ring according to one of Claims 1 to 4, characterised in that it consists of two ring halves (1'') divided in a central radial plane.

## Revendications

1. Bague d'étanchéité composée de lamelles (1) en graphite expansé et de lamelles métalliques (2) disposées en alternance, la bague d'étanchéité présentant une ouverture de passage (4) qui définit un bord intérieur (3), caractérisée en ce que la bague d'étanchéité est en forme de lentille, les lamelles de graphite (1) présentant une densité qui croît de l'intérieur vers l'extérieur et la stratification étant réalisée de manière que, sur les deux côtés, au moins la moitié de la surface bombée, vue à partir du bord intérieur (3), soit recouverte par une lamelle de graphite ininterrompue (1'), tandis que, dans la région du bord extérieur (5), plusieurs lamelles de métal et de graphite (1, 2) débouchent circonférentiellement.

2. Bague d'étanchéité selon la revendication 1, caractérisée en ce que la lamelle de graphite ininterrompue (1') s'étend sur environ 50 à 90% de la surface bombée.

3. Bague d'étanchéité selon la revendication 1 ou 2, caractérisée en ce que la densité varie de l'intérieur vers l'extérieur, d'environ 0,9-1,4 g/cm³ jusqu'à environ 1,8-2,3 g/cm³.

4. Bague d'étanchéité selon une des revendications 1 à 3, caractérisée en ce qu'une bague de limitation (7') est prévue sur le côté supérieur et/ou sur le côté inférieur dans le voisinage de l'ouverture de passage (4).

5. Bague d'étanchéité selon une des revendications 1 à 4, caractérisée en ce que la région de bord extérieur (5) est entourée d'une bague de limitation (7").

6. Bague d'étanchéité selon une des revendications 1 à 4, caractérisée en ce qu'elle est composée de deux demi-bagues (1") séparées dans un plan radial médian.
